# EUROPEAN PATENT APPLICATION

(11) **EP 1 447 864 A1**
(43) Date of publication of application: **18.08.2004**
(21) Application number: 02801555.0
(22) Date of filing: 11.10.2002
(51) Int. Cl.: H01M 2/02

(54) **BATTERY CAN, AND BATTERY USING THE BATTERY CAN**

(30) Priority: 12.10.2001 JP 2001314944
(71) Applicant: MATSUSHITA ELECTRIC INDUSTRIAL CO., LTD., Kadoma-shi, Osaka 571-8501 (JP)
(72) Inventor: HANO, Masatoshi, Katano-shi, Osaka 576-0052 (JP); HIGASHI, Kazuyuki, Kadoma-shi, Osaka 571-0039 (JP); TOKUMOTO, Tadahiro, Hirakata-shi, Osaka 573-1106 (JP)
(74) Representative: Rackham, Stephen Neil
(86) International application number: PCT/JP2002/010631
(87) International publication number: WO 2003/034516

(57) **Abstract**

In a battery constituted by accommodating power-generating elements consisting of an electrode assembly (41) and electrolyte, a battery case (1) is formed so as to have closed-end tubular outer shape with a plurality of projecting ridges (3) extending linearly on the case inner surface (2) so as to from the inner surface side of the case in the direction of the case wall thickness, the projecting ridges (3) being arranged on the opposite sides of the tube center (S) so as to be inclined with respect to the direction of the tube center such that the projecting ridges (3) mutually intersect and are connected at the intersections (9), thus forming a grid pattern.

## Description

### Technical Field

The present invention relates to a closed-end tubular battery case used as an external casing for various types of batteries including lithium rechargeable batteries, and in particular, to a battery case provided with construction that exhibits an excellent effect in preventing bulging deformation when formed into a rectangular tubular shape, and a battery constructed by using the same.

### Background Art

Development in electronics technologies in recent years has brought sophistication of electronic equipment, which in turn has enabled miniaturization, weight reduction, and lower power consumption of electronic equipment. As a result, a variety of consumer portable equipment has been developed and put to practical use, and the market for such equipment is now growing rapidly. Typical examples of such equipment are camcorders, notebook personal computers, cellular phones, and the like. For these equipment items, there exists a continuous demand for further miniaturization and weight reduction, as well as for elongation of operating time. To respond to these demands, lithium rechargeable batteries as typified by lithium ion rechargeable batteries having long life and high energy density have been actively developed and many of them are employed.

Among various types of batteries presently in practical use, lithium ion rechargeable batteries have far more remarkable advantages compared to others not only in terms of energy density per unit volume that is used as a parameter for miniaturization of the batteries, but also in terms of energy density per unit weight that is used as a parameter for weight reduction of the batteries. The energy density of a battery principally depends on a battery active material used for cathode and anode constituting power generating elements, while miniaturization and weight reduction of a battery case accommodating the power generating elements are also important factors. This is because the weight of a battery case accounts for a large part of the total weight of a battery, and if the case wall thickness of the battery case can be thinned, the weight of the battery case can be decreased by that amount and also the capacity of the battery case is made larger compared to other battery cases having the same external shape. Accordingly, the battery case is enabled to accommodate more battery active material so that the volume energy density for the battery as a whole can be improved. Also, if the battery case can be made of a lightweight material, the weight of the battery as a whole can be decreased and thereby the weight energy density can be improved.

In the trend as mentioned in the above, rectangular batteries using a thin rectangular battery case as an external casing are regarded important since they are effective for realizing lower profile equipment and capable of affording high space efficiency. However, if the wall thickness of a battery case for a rectangular battery is set small for the purpose of increasing the volume energy density and hence the capacity of a rectangular battery, the strength of the case will be too low to ensure a required compressive strength when practically used as the battery. In particular, if the battery case is formed with a lightweight material such as aluminum, the aforementioned problem of insufficient compression strength becomes more notable.

Specifically, a rectangular battery case deforms more than a stable-shaped, cylindrical battery case when the internal pressure of the battery increases, and such deformation occurs particularly in the long side plates which bulge outwards in a drum-shape so as to approximate a cylindrical shape that is a more stable shape. If a rectangular battery using such a rectangular battery case with insufficient compressive strength as mentioned in the above is put in practical use, the bulging deformation of the battery case will become worse, and may induce various troubles including increase of internal resistance of the battery, leakage of the electrolyte, and' damages to equipment caused by electrolyte leakage.

To solve these problems, the prior arts have proposed, for example, a rectangular battery case in which the wall thickness of long side plates susceptible to bulging during increase of internal pressure of the battery is set greater than that of short side plates (see Japanese Laid-Open Patent Publication No. Hei 6-52842) and a rectangular battery case in which the wall thickness of long side plates is set greater than that at the corners (see Japanese Laid-Open Patent Publication No. 2000-182573). Although these types of rectangular battery cases can ensure enough compressive strength to prevent the deformation of the battery cases effectively during increase of battery internal pressure, the wall thinning and weight decrease for the battery case as a whole are sacrificed since the wall thickness of the long side plates that account for the greatest part of the surface area of the case walls is made greater. As a result; the capacity of the battery case accommodating power generating elements becomes smaller and neither the volume energy density nor weight energy density can be improved.

On the other hand, there have also been proposed a battery case in which a plurality of linear protrusions are formed on the inner face of the case vertically to the bottom face and parallel to one another (see Japanese Laid-Open Patent Publication No. Hei 9-219180), and a battery case in which the wall thickness of the sides of the case is made smaller than that of the bottom and a plurality of vertical ridges are formed on the inner face of the case parallel to the center of the tubular case (see Japanese Patent Publication No. Hei 7-99686). It is true that these types of battery cases have advantages that they are capable of increasing the capacity for accommodating power generating elements to a certain extent, and are capable of decreasing the internal resistance', when the battery is put in practical use, because the linear protrusions or vertical ridges serve to increase the contact area between the battery case and the power generating elements. However, the plurality of linear protrusions or vertical ridges that are parallel to the center of the tubular case are not capable of preventing the bulging deformation of the battery case during the increase of battery internal pressure.

Further, particularly in a battery using a spiral electrode assembly, it is common practice that the outer shape of a battery case is made as large as possible within the limit of allowing the electrode assembly to be inserted into the battery case and the electrode assembly is inserted with substantially no gap left between the electrode assembly and inner surface of the case, for the purpose of improving the capacity of the battery. However, according to this method, the frictional resistance between the electrode assembly and the inner surface of the battery case becomes large, which poses a problem that the electrode assembly cannot be inserted into the battery case smoothly. Further, vacuum injection means is employed for injecting electrolyte after the insertion of the electrode assembly in order to facilitate smooth penetration of the electrolyte. However, in reality, it takes a lot of labor and time to inject the electrolyte since there is substantially no gap between the inner surface of the battery case and the electrode assembly.

Accordingly, the present invention has been made in view of the foregoing problems related to the conventional techniques, and has an object of providing a battery case that has enough strength to prevent effectively the bulging deformation during increase of the battery internal pressure, has a configuration allowing smooth insertion of an electrode assembly and still is capable of improving the energy density when used for a battery. Also, the present invention has an object of providing a battery constituted by using such a battery case.

### Disclosure of the Invention

In order to achieve the object above, a battery case according to the present invention has a closed-end tubular outer shape for accommodating power-generating elements consisting of an electrode assembly and electrolyte to configure a battery, and is provided, on an inner surface of the case, with a plurality of projecting ridges extending linearly and projecting inwards from the inner surface side of the case in a direction of a case wall thickness, the projecting ridges being arranged on opposite sides of a tube center so as to be inclined with respect to a direction of the tube center such that the projecting ridges intersect mutually to form a grid pattern and are connected mutually at respective intersections.

In this battery case, the linear portions along the projecting ridges on the case inner surface are made thicker by the height of the projecting ridges, and the strength of the projecting ridges is enhanced by the cube of the projecting height of the projecting ridges in comparison with the region of the case inner surface where no projecting ridges is formed. Moreover, since the projecting ridges are connected with each other at the intersections, the strength is enhanced in two or more directions by the projecting ridges. Therefore, even if the wall thickness of the case is relatively thin to ensure sufficient volume energy density and weight energy density, the projecting ridges function like reinforcing bars in case of increase of the battery internal pressure, and the bulging deformation is effectively suppressed in every direction.

According to the present invention, it is preferable that at least two groups of the projecting ridges be provided on the opposite sides of the tube center so as to be inclined at the same angle with respect to the tube center and the projecting ridges in each group be arranged parallel to each other. Since the projecting ridges are thus arranged symmetrically to the tube center, the force acting to cause the bulging deformation in association with increase of the battery internal pressure will be dispersed uniformly all over the projecting ridges formed symmetrically to the tube center, and therefore.the strength given by the projecting ridges to suppress the,bulging deformation is enhanced effectively.

In the constitution described above, the two groups of the projecting ridges are preferably formed on the opposite sides of the tube center so as to be inclined both at an angle of 45 degrees with respect to the direction of the tube center. Then, the battery case is subjected to bulging deformation along the direction of 45 degrees to the tube center when the battery internal pressure rises. This means that the projecting ridges of the battery case are arranged orthogonally to the direction along which bulging deformation occurs, and therefore the strength against the bulging deformation is enhanced to the maximum.

According to the present invention as described above, it is preferable that the projecting ridges be inclined at an angle within the range of 0 to 90 degrees with respect to the direction of the tube center. In this manner, the projecting ridges are enabled to suppress the bulging deformation effectively without causing any trouble. Specifically, if the inclination angle of the projecting ridges is 90 degrees, the frictional resistance produced when an electrode assembly is slidingly inserted into the battery case will be so large that the electrode assembly cannot be inserted easily. Whereas if the inclination angle is 0 degrees, namely if the projecting ridges are arranged parallel to the tube center, the strength against the bulging deformation caused by increase of the battery internal pressure will be low.

According to the invention described above, the projecting ridges preferably have a longitudinal sectional shape of a circular-arc. By doing so, the projecting ridges have no edge at all and hence when an electrode assembly is inserted into the battery case, being slid on the case inner surface for the manufacturing of a battery, the projecting ridges will not damage the electrode assembly in any way.

According to the present invention, it is preferable that a battery case has a closed-end, rectangular tubular external shape with a substantially rectangular cross sectional shape, and has the projecting ridges formed on the case inner surface at least of long side plates of the closed-end tubular body. In the rectangular battery case constructed in this manner, the long side plates which are most susceptible to bulging deformation in case of increase of the battery internal pressure are provided with increased strength by being reinforced by a large number of projecting ridges functioning like reinforcing bars, and hence the bulging deformation is suppressed effectively even if the battery internal pressure is applied to the long side plates. In other words, if the projecting ridges are formed on the case inner surface of the long side plates of the rectangular battery case, the effect of the projecting ridges to suppress the bulging deformation is exhibited most effectively.

In the battery case constructed as described above, a wall thickness of the long side plates may be set to 0.25 mm or less. Specifically, since the long side plates are provided with a plurality of projecting ridges extending linearly and arranged in a grid pattern, the bulging deformation is suppressed effectively in every direction even if the wall thickness of the case is thin. Therefore, it is possible to set the wall thickness of the long side plates of the case to an as small as possible value of 0.25 mm or less while reliably preventing the bulging deformation.

In the constitution described above, it is preferable that a wall thickness t₁ of the long side plates, a wall thickness t₂ of short side plates, and a wall thickness t₃ of corners satisfy the relationship of t₁ < t₂ < t₃. Specifically, since the long side plates are prevented from bulging deformation effectively by the presence of the grid projecting ridges, the wall thickness t₁ thereof is made as small as possible. Although the short side plates will be depressed in such a manner that they are bent inward when the long side plates are subjected to outward bulging deformation due to increase of the battery internal pressure, this inward depression is suppressed by the fact that the short side plates have the wall thickness t₂ that is larger than the wall thickness t₁ of the long side plates, and the short side plates act to inhibit the bulging deformation of the long side plates. The corners each serve as a fulcrum of deformation for the long side plates when deformed to bulge outwards and for the short side plates when depressed inwards. By making the thickness t₃ of the comers the largest, the deformation caused by increase of the battery internal pressure is suppressed effectively both in the long side plates and short side plates. Moreover, the wall of the corners may be extended inwards to increase the thickness t₃ by an extent corresponding to clearance produced between the corner wall and an electrode assembly accommodated in the battery case without decreasing the capacity for the electrode assembly. In this manner, the battery case assumes configuration ensuring sufficient compressive strength while keeping the capacity for accommodating power-generating elements large.

According to the invention described above, a projecting height of the projecting ridge from the case inner surface is preferably set to a value in the range from 1 to 50% of the wall thickness of the case. This is because that if the value is equal to or less than 1%, enough effect of prohibiting the bulging deformation is not provided. Whereas'if the value is equal to or more than 50%, not only the capacity of the battery case is decreased, inducing decrease of the volume energy density, but also the chance of producing defective battery cases are increased. Moreover, the effect of suppressing the bulging deformation will not differ greatly from the case of 50%. More preferably, the projecting height may be set to a value in the range of 5 to 20% of the wall thickness of the case, and most preferably, it may be set to a value in the range of 5 to 10% of the wall thickness of the case.

In the constitution described above, it is preferable that a width of the projecting ridge be set to a value in the range from 1 to 30 times of the projecting height from the case inner surface. This is because if it is equal to or less than one time, it becomes possible to form projecting ridges having an enough projecting height to suppress the bulging deformation effectively. Whereas if it is equal to or more than 30 times, the internal volume of the battery case will be decreased to induce the decrease of the volume energy density. More preferably, the width is set to a value within the range of 5 to 20 times of the projecting height, and most preferably, the width is set to a value within the range of 10 to 15 times of the projecting height.

In the constitution described above, an interval between the projecting ridges arranged parallel to one another is preferably set to a value within the range from 2 to 20 times of the width thereof. This is because if it is equal to or less than 2 times, the internal volume of the battery case will be decreased to induce decrease of the volume energy density. Whereas if'it is equal to or more than 20 times, an enough effect of suppressing the bulging deformation cannot be obtained. More preferably, the interval is set to a value within the range from 5 to 15 times of the width.

According to the invention described above, it is preferable that at least a region of the closed-end tube extending from an open end to an extent where a bottom of a sealing member is inserted be a flat portion with no projecting ridges formed. Particularly in a rectangular battery, a sealing member is fitted to the inner periphery of the opening portion of a rectangular battery case, and the rectangular battery case and the inserted part of the sealing member are integrated by laser welding. When the laser welding is performed, if the region of the battery case where the sealing member is inserted is a flat portion, the inserted sealing member is adhered to the battery case without any clearance therebetween and hence the laser welding will be carried out easily.

A battery case according to the invention described above is preferably made of aluminum or an aluminum alloy. By forming the battery case from a lightweight material as such, the weight energy density is improved and, also, by forming the battery case from a material having good extensibility, projecting ridges are formed easily. Furthermore, since the battery case is made of aluminum or an aluminum alloy and is still reinforced by forming the projecting ridges, the bulging deformation caused by increase of the battery internal pressure is suppressed effectively.

A battery according to the present invention is constituted by using any of the battery cases according to the present invention, accommodating power-generating elements in the interior of the battery case and sealing an opening portion of the battery case with a sealing member in a fluid-tight configuration.

The battery thus constituted is effectively prevented from bulging deformation by the projecting ridges functioning as reinforcing bars, even if the battery internal pressure rises for some reason. Also, the wall thickness of the case is made thicker only at the parts where the projecting ridges are formed while the other parts of the case are formed relatively thin. Therefore, it is possible to ensure sufficient weight energy density and volume energy density. When an electrode assembly is accommodated in the battery case, the outer surface of the electrode assembly slides in linear contact with the projecting ridges, whereby the friction produced during the insertion of the electrode assembly is decreased remarkably and the performance of inserting the electrode assembly is improved. As a result, the electrode assembly is inserted into the battery case smoothly and rapidly. Since electrolyte enters into the battery case, passing through clearance between the electrode assembly and the case inner surface of the battery case where no projecting ridges are formed, and the clearance serves as a passage for letting gas to escape during the injection of the electrolyte, it is possible to inject the electrolyte in a short period of time and the performance of injecting the solution is improved remarkably.

### Brief Description of the Drawings

Fig. 1A is a perspective view showing the longitudinal sectional configuration of a battery case according to an embodiment of the present invention, Fig. 1B is a perspective view showing a partial enlargement of the case inner surface of the battery case, Fig. 1C is a perspective view cut along the line A-A in Fig.lA, and Fig. 1D is a cut-away perspective view of a part of a conventional battery case shown for comparison with Fig. 1C;
Fig. 2A is an explanatory drawing of projecting ridges formed on the case inner surface of the battery case according to the embodiment, Fig. 2B is a cross section showing the cross sectional shape of the projecting ridges;
Fig. 3 is a schematic view showing the state where the battery case according to the embodiment has been subjected to bulging deformation;
Fig. 4A is a schematic front view showing the state where the battery case is attached to a bulging deformation measurement device used as means for measuring the bulging deformation of the battery case according to the embodiment, Fig. 4B is a schematic front view showing the state where the battery case being measured;
Fig. 5 is a plan view showing the configuration of an opening portion of the battery case according to the embodiment;
Fig. 6 is a characteristic diagram of the relationship between the internal pressure and bulging deformation of the battery case, showing the results of the measurement of the embodiment;
Figs. 7A through 7C are cross sections respectively showing projecting ridges having different cross sectional shapes formed in battery cases according to other embodiments of the present invention;
Figs. 8A through 8C respectively illustrate projecting ridges arranged in different ways on the case inner surfaces of battery cases according to other embodiments of the present invention;
Figs. 9A through 9C are schematic cross-sectional views showing the sequential stages in a first step of a first manufacturing method of the battery case;
Fig. 10 is a schematic cross-sectional view showing a second step of the manufacturing method;
Fig. 11A is a perspective view showing a punch used in the second step, Fig. 11B is an enlargement view of the part B in Fig. 11A;
Fig. 12A is a cut-away front view of a battery according an embodiment of the invention, constituted by using the aforementioned battery case, Fig. 12B is a cut-away side view showing a part of the battery; and
Figs. 13A and 13B are schematic perspective views respectively showing sequential manufacturing steps of a second method of manufacturing the battery case according to the embodiment.

### Best Mode for Carrying Out the Invention

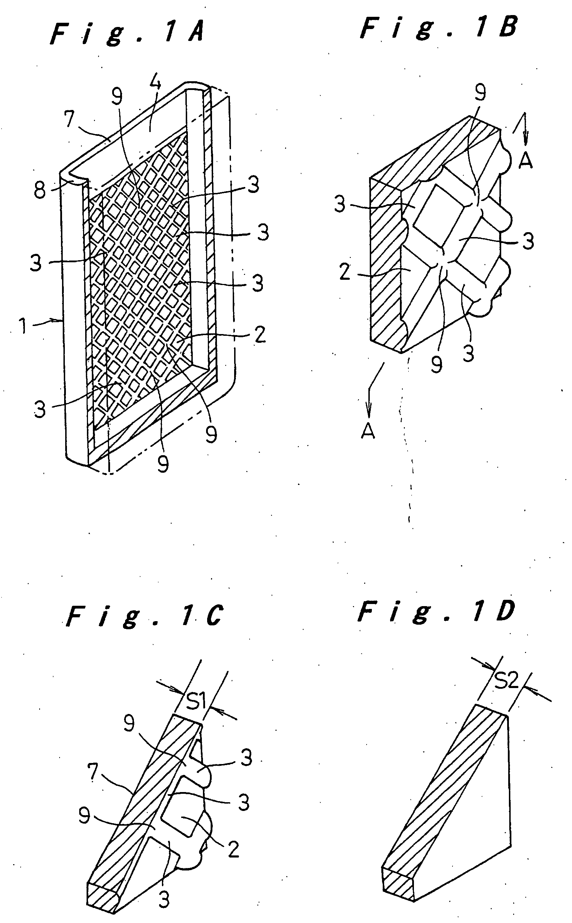

Now, a preferred embodiment of the present invention will be described with reference to the drawings. Fig. 1A is a perspective view showing the longitudinal sectional configuration of a battery case 1 according to an embodiment of the present invention, and Fig. 1B is a perspective view showing enlargement of a part of the case inner surface 2 of the'battery case 1. The battery case 1 is formed from aluminum such that it externally assumes a closed-end tubular configuration, the cross sectional shape of which is substantially rectangular. A large number of projecting ridges 3 are arranged in a grid pattern on the case inner surfaces 2 of long side plates 7 on the opposite sides (only one of them is illustrated) of the battery case 1. As clearly shown in Fig. 1B, the projecting ridges 3 are formed by the inner surface side of the case wall projecting inwards in the thickness direction of the case wall such that they extend linearly.

It should be noted that in the rectangular battery case 1 according to this embodiment, the projecting ridges 3 are formed only on the case inner surface 2 of a pair of opposing long side plates 7 and not on short side plates 8. This is because the projecting ridges 3 formed on the short side plates 8 will not contribute so much to the effect as described below, but the projecting ridges 3, of course, may be formed on the short side plates 8 as well. In this regard, however, the region in the case inner surface 2, of both the short side plates 8 and long side plates 7, that extends from the open end to the position where a sealing member to be described later is inserted should be left as a flat portion 4 with no projecting ridges 3 formed.

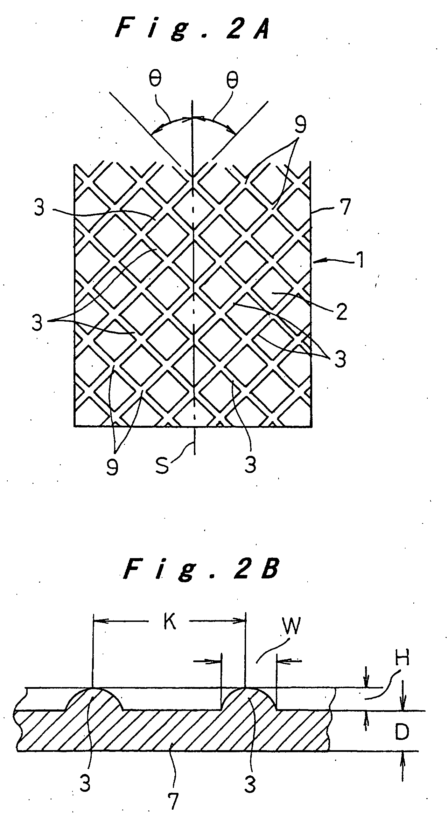

Fig. 2A shows the configuration of the projecting ridges 3 formed on the case inner surface 2 of the long side plate 7 of the foregoing battery.case 1, as seen in the front view. The projecting ridges 3 are arranged, on the case inner surface 2, such that a group of the projecting ridges 3 extend parallel to each other while being inclined at an angle θ of 45 degrees to the direction of the tube center S of the closed-end rectangular tube on the opposite sides of the tube center S, and another such group of the projecting ridges 3 extend in a similar manner but intersect with the other group of projecting ridges 3 to form a grid pattern. Therefore, these two groups of projecting ridges 3, each extending parallel to each other, mutually intersect at right angles and are mutually connected at the intersections 9.

When a battery is constructed using this rectangular battery case 1, the long side plates 7, which are most susceptible to bulging during increase of the battery internal pressure, are provided with improved strength by being reinforced with a multiplicity of the projecting ridges 3 functioning as reinforcing bars, and therefore the bulging deformation due to the battery internal pressure is suppressed remarkably. As a result, since this rectangular battery case 1 is made of lightweight aluminum with the long side plates 7 of the case being formed to a thickness smaller than the wall thickness S2 of a conventional battery case shown in Fig. 1D for comparison, a sufficient volume energy density and a sufficient weight energy density are ensured, nevertheless the bulging deformation is suppressed remarkably as described below.

It is known that deflection strength of the battery case 1 is increased in proportion to the cube of a wall thickness of the case. As shown in Fig. 1C that is a perspective view cut along the line A-A in Fig. 1B, the wall thickness S1 of the linear part along the projecting ridge 3 on the long side plate 7 of the case is set to a value similar to that of the wall thickness S2 and, therefore, this part along the projecting ridge 3 has a strength larger than other parts of the long side plate 7 where no projecting ridge 3 is present by the cube of the height of the projecting ridge 3 from the surface of the other parts. Moreover, since the projecting ridges 3 intersect with one another at the intersections 9, the strength is increased by the projecting ridges 3 in at least two directions, and it is thereby made possible to suppress the bulging deformation in every direction effectively. On the contrary, if the projecting ridges 3 are arranged without the intersections 9, the strength against bending in the direction perpendicular to the projecting ridge 3 will be surely increased but the strength in other directions will be insufficient.

Further, since in each of the two groups, the projecting ridges 3 are arranged parallel at regular intervals on the opposite sides of the tube center S while being inclined at an angle of 45 degrees to the direction of the tube center S such that the arrangement of the projecting ridges 3 is symmetrical with respect to the tube center S. Therefore, the action of the battery internal pressure will be distributed evenly all over the long side plates 7, and the strength of the long side plates 7 is increased by the projecting ridges 3 so as to suppress the bulging deformation effectively.

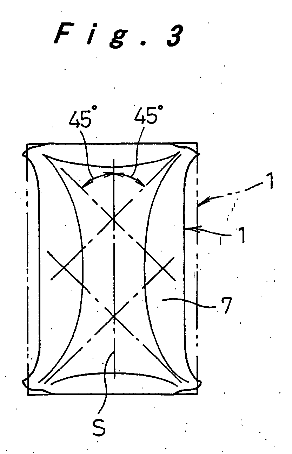

Also, the projecting ridges 3 of the foregoing battery case 1 are arranged on the opposite sides of the tube center S such that they are inclined at an angle θ of 45 degrees with respect to the direction of tube center S and intersect with one another at right angles, and the bulging deformation is suppressed further effectively by this constitution, as described below. Fig. 3 is a schematic view showing the rectangular battery case 1, which is actually deformed to bulge outwards. More specifically, Fig. 3 shows the state where the long side plates 7 are deformed to bulge outwards by applying a pressure of 20 kg/cm² to the inside of the battery case 1, and it can be seen that the battery case 1 is deformed to bulge along the direction at an angle of 45 degrees to the tube center S. Therefore, the projecting ridges 3 of the battery case 1, that are arranged orthogonally to the direction along which the bulging deformation occurs, are in an arrangement capable of increasing the strength against bulging deformation to the utmost extent.

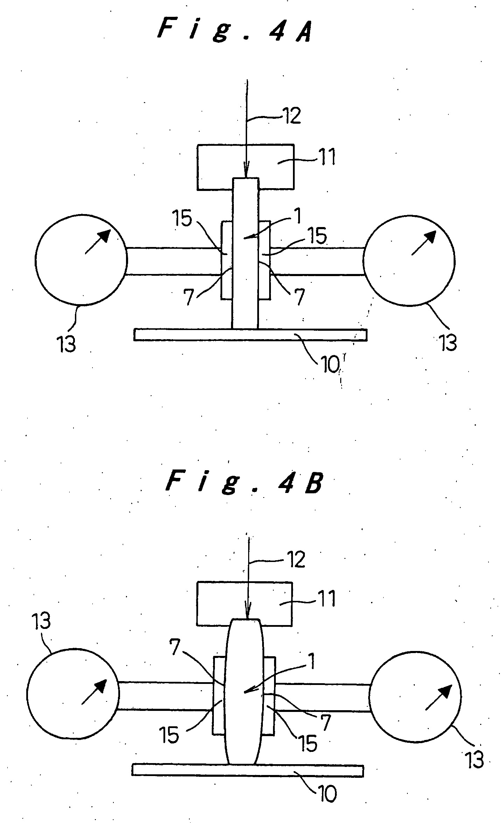

Figs. 4A and 4B illustrate a bulging deformation measurement device used as means for measuring the bulging deformation of the battery case 1, Fig. 4A being a schematic front view showing the state where a battery case 1 is attached to the bulging deformation measurement device and Fig. 4B being a schematic front view showing the state where the measurement is performed. This bulging deformation measurement device is constructed such that a battery case 1 is set erect on a mounting table 10, the opening portion of the battery case 1 is sealed hermetically with a sealing gasket 11, and compressed air 12 is fed gradually to the inside of the battery case 1 through the sealing gasket 11 to apply a predetermined pressure to the inside the battery case 1. A pressure sensing section 15 of a measurement gauge 13 is applied to the outer face of each of the opposite long side plates 7 of the battery case 1, so that an amount of bulging deformation of the long side plates 7 is measured by means of the measurement gauges 13.

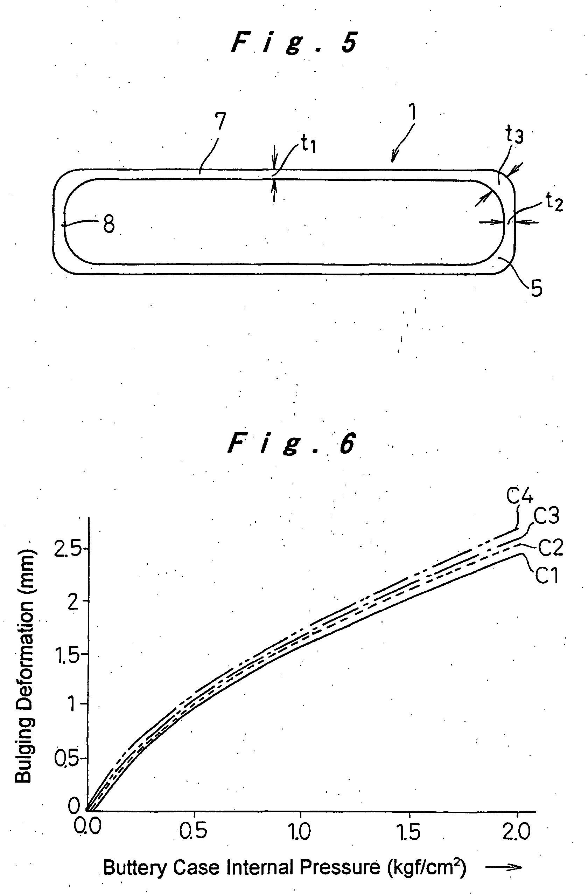

Fig. 6 is a characteristic diagram showing an example of the results of the measurement by the bulging deformation measurement device as shown in Figs. 4A and 4B, and showing the relationship between the internal pressure in the battery case 1 and bulging deformation of the long side plates 7. C1 through C3 are characteristic curves of the battery case 1 formed into different shapes according to an embodiment of the present invention, whereas C4 is a characteristic curve of a conventional battery case shown for comparison. All of the rectangular battery cases used for these measurements were formed into a same outer shape with the width of long side plates being 30 mm, the width of short side plates being 5 mm, the height being 47 mm, the wall thickness of the long side plates being 0.2 mm, the wall thickness of the short side plates being 0.3 mm, the wall thickness at the corners being 0.5 mm, and the wall thickness of bottom plates being 0.4 mm, and were formed with the JIS #3003 aluminum. An air pressure of 0.1 kg/cm² per second was applied to all these battery cases, and bulging deformation at the long side plates 7 was measured by means of the bulging deformation measurement gauges 13.

The characteristic curve C1 shows the measurement result of the rectangular battery case 1 provided with projecting ridges 3 having a width W of 0.2 mm, a projecting height H of 0.02 mm, an interval K of 2 mm, and an inclination angle θ to the tube center S is 45 degrees. The characteristic curve C2 shows the measurement result of the rectangular battery case 1 provided with projecting ridges 3 having a width W of 0.1 mm, a projecting height H of 0.01 mm, an interval K of 1 mm, and an inclination angle θ to the tube center S is 45 degrees. The characteristic curve C3 shows the measurement result of the rectangular battery case 1 provided with projecting ridges 3 having a width W of 0.1 mm, a projecting height H of 0.01 mm, an interval K of 2 mm, and an inclination angle θ to the tube center S is 45 degrees.

As is obvious from the measurement results of Fig. 6, it has been proved that, in the battery cases 1 according to the embodiment of the present invention, even though the wall thickness of the case formed from the lightweight material, aluminum is made as thin as 0.2 mm to ensure sufficient weight energy density and volume energy density, the bulging deformation of the long side plates 7 due to increase of the battery internal pressure is suppressed to a significantly lower level in comparison with the conventional battery case not provided with projecting ridges 3. In other words, the battery case 1 according to the present embodiment has made it possible to make the wall thickness of the long side plates 7 as thin as 0.25 mm or less (0.20 mm according to the embodiment) by providing the projecting ridges 3 in the grid pattern on the long side plates 7 for preventing the bulging deformation effectively.

After studying further various measurement details obtained by using the bulging deformation measurement device shown in Figs. 4A and 4B, it has been found that, if the projecting ridges 3 are formed on the case inner surface 2 of the battery case 1 by setting each of the projecting height H, width W and interval K as shown in Fig. 2B to a value within the range as described below, the bulging deformation caused by increase of the battery internal pressure is suppressed effectively while ensuring a sufficient energy density.

Specifically, the projecting height H of the projecting ridges 3 is preferably set to a value within the range from 1 to 50% of the wall thickness D of the battery case 1 (the wall thickness of the long side plates 7 if the battery case 1 is in a rectangular shape). A projecting height H of 1% or less cannot provide sufficient suppression of bulging deformation, while a projecting height of 50% or more decreases the capacity of the battery case 1 and hence the volume energy density, and moreover makes it difficult to fabricate the battery case 1. More preferably, the projecting height H is set to a value within the range of 5 to 20% of the wall thickness D of the case, and most preferably, the projecting height H is set to a value within the range of 5 to 10% of the wall thickness D of the case.

The width W of the projecting ridges 3 is preferably set to a value within the range corresponding to 1 to 30 times of the aforementioned projecting height H. A width W of one time or less cannot provide projecting ridges 3 having an enough projecting height H to suppress the bulging deformation effectively. Whereas a width W of 30 times or more decreases the internal volume of the battery case 1 and induces the decrease of the volume energy density. More preferably, the width W is set to a value within the range of 5 to 20 times of the projecting height H, and most preferably, the width W is set to a value within the range of 10 to 15 times of the projecting height H.

The interval K between the projecting ridges 3 is preferably set to a value within the range of 2 to 20 times of the aforementioned width W. An interval K of 2 times or less decreases the internal volume of the battery case 1 and hence induces the decrease of the volume energy density, whereas an interval K of 20 times or more cannot suppress the bulging deformation sufficiently. More preferably, the interval K is set to a value within the range of 5 to 15 times of the width W.

Further, as shown in Fig. 5, the battery case 1 is formed into such configuration that the wall thickness t₁ of the long side plates 7 is smaller than the wall thickness t₂ of the short side plates 8, which is smaller than the wall thickness t₃ of the corners 5, whereby the following remarkable effects is obtained.

Since the long side plates 7 effectively suppress the bulging deformation due to the presence of projecting ridges 3 arranged in the grid pattern, the wall thickness ti of the long side plates 7 are made as small as possible. The short side plates 8 are depressed such that they are bent inwards when the long side plates 7 are deformed to bulge'outwards due to increase of the battery internal pressure, but since the short side plates 8 have the wall thickness t₂ that is larger than the wall thickness t₁ of the long side plates 7, the inward depression of the short side plates 8 is suppressed and the short side plates 8 act to prevent the bulging deformation of the long side plates 7. The corners 5 act as fulcrums of deformation for the long side plates 7 when deformed to bulge outwards and for the short side plates 8 when depressed inwards. By making the wall thickness t₃ of these corners 5 to be the thickest, it is made possible to prevent the deformation of both the long side plates 7 and the short side plates 8 more effectively during the increase of the battery internal pressure. Moreover, the corners 5 may be extended inwards by an amount corresponding to clearance created between the corners and an electrode assembly accommodated in the battery case 1 so as to increase the wall thickness t₃ by that amount without decreasing the capacity to accommodate the electrode assembly. In this manner, the battery case 1 assumes configurations that ensure a large capacity for accommodate the power-generating elements and still ensure sufficient compressive strength.

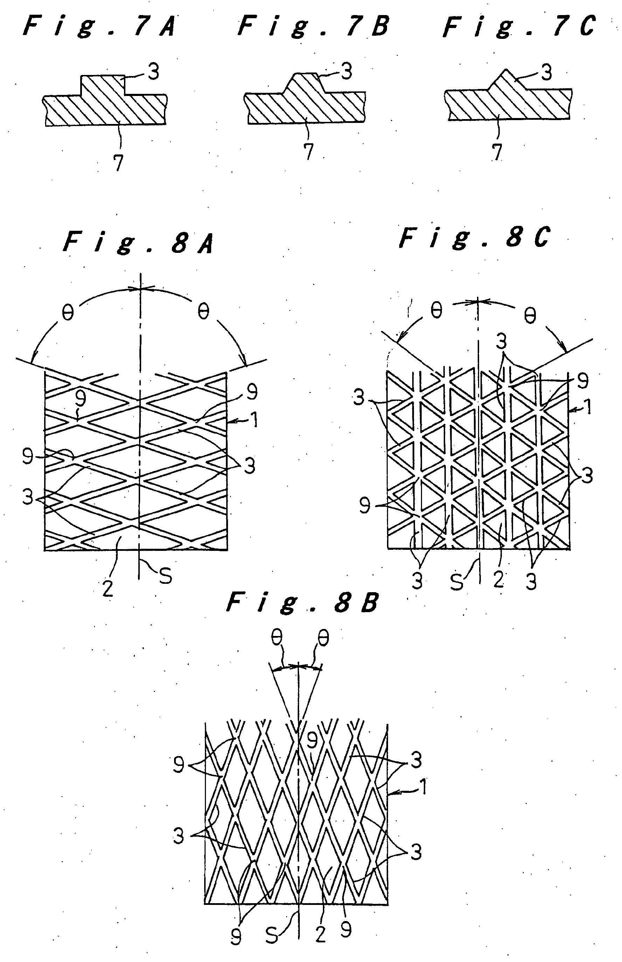

Figs. 7A through 7C are cross sections showing different projecting ridges 3 having different cross sectional shapes formed on the long side plates 7 of the battery case 1 according to other embodiments of the present invention. The projecting ridge 3 shown in Fig. 7A has a rectangular cross-sectional shape, the projecting ridge 3 in Fig. 7B has a trapezoidal cross-sectional shape, and the projecting ridge 3 in Fig. 7C has a triangular cross-sectional shape. Even these projecting ridges 8 having such cross sectional shapes provide, similarly to the projecting ridge 3 having a circular-arc cross sectional shape, an effect of effectively suppressing the bulging deformation of the long side plates 7 during increase of the battery internal pressure while ensuring a sufficient energy density when practically used in a battery, provided that the projecting height H, width W and interval K satisfy the conditions as described above. It should be noted, however, that the most preferable is the projecting ridge 3 having a circular-arc cross sectional shape according to the first embodiment, since there is no edge in these projecting ridges 3 unlike those projecting ridges 3 as shown in Figs. 7A through 7C and therefore there is no risk at all that an electrode assembly is damaged when it is inserted in a battery case 1 while being slid on the case inner surface 2 during the fabrication of a battery.

Figs. 8A through 8C respectively show projecting ridges 3 arranged in different manners on the case inner surface 2 of a long side plate 7 of a rectangular battery case 1 according to other embodiments of the present invention. In the battery case 1 of Fig. 8A, two groups of projecting ridges 3 are arranged on the opposite sides of the tube center S on the case inner surface 2 of the long side plate 7 such that the projecting ridges 3 of each group extend parallel to each other and are inclined at an inclination angle θ of about 70 degrees with respect to the direction of the tube center S and such that these two groups of projecting ridges 3 form a mesh shape. Further, the projecting ridges 3 in one group extending parallel to each other intersect with those in the other group also extending parallel to each other at an angle of about 140 degrees, and are connected mutually at the intersections 9.

In the battery case 1 of Fig. 8B, two groups of projecting ridges 3 are arranged on the opposite sides of the tube center S on the case inner surface 2 such that the projecting ridges 3 of each group are inclined at an inclination angle θ of about 20 degrees with respect to the direction of the tube center S and extend parallel to each other, and such that they form a mesh shape. Further, the projecting ridges 3 in one group extending parallel to each other intersect with those in the other group also extending parallel to each other at an angle of about 40 degrees, and are connected mutually at the intersections 9.

In the battery case 1 of Fig. 8C, two groups of projecting ridges 3 are arranged on the opposite sides of the tube center S on the case inner surface 2 such that the projecting ridges 3 of each group,. which are inclined at an inclination angle θ of about 60 degrees with respect to the direction of the tube center S and also extend parallel to each other, intersect with the projecting ridges 3 of the other group at an angle of about 120 degrees and are mutually connected at the intersections 9. Further, a plurality of projecting ridges 3 are additionally provided so as to extend parallel to the tube center S while intersecting with the two groups of the projecting ridges 3 at the intersections 9.

The projecting ridges 3 as shown in Figs. 8A through 8C are all arranged in a similar manner in terms of the fact that two groups of the projecting ridges 3 are arranged on the opposite sides of the tube center S such that the projecting ridges of each group are inclined at a same angle θ with respect to the direction of the tube center S and extend parallel to each other, and the two groups of the projecting ridges 3 are connected mutually at the intersections 9. In this manner, any force acting to cause bulging deformation in the long side plates 7 according to increase of the internal pressure of the battery case 1 is dispersed evenly all over the projecting ridges 3 formed symmetrically to the tube center S. As a result, the strength given to the long side plate 7 by the projecting ridges 3 is increased effectively and, also, in two or more directions due to the presence of the intersections 9. Thus it is made possible to prevent bulging deformation in every direction effectively.

Further, as is obvious from the configurations of the projecting ridges 3 of Figs. 8A through 8C, since the projecting ridges 3 are inclined with respect to the direction of the tube center S at an inclination angle θ within the range of 0 to 90 degrees, the bulging deformation of the long side plates 7 is suppressed effectively. Specifically, if the inclination angle θ of the projecting ridges is 90 degrees, the frictional resistance produced when an electrode assembly is slidingly inserted into the battery case 1 becomes too large to insert the electrode assembly easily. On the other hand, if the inclination angle θ is 0 degrees, in other words, if the projecting ridges are arranged parallel to the tube center S, the strength of the long side plates 7 against bulging deformation becomes low. However, if the projecting ridges extending parallel to the tube center S (the inclination angle of 0 degrees) and projecting ridges extending orthogonal to the tube center S (the inclination angle of 90 degrees) are arranged so as to intersect at right angles and to form a grid pattern; the projecting ridges become symmetrical to the tube center S and have intersections. As a result, this arrangement also provides a substantially same effect as those described above.

The embodiments above have been described for the case in which the battery case 1 is made of aluminum, a material that is lightweight and highly extensible to enable easy formation of the projecting ridges 3. It should be noted, however, that the same effects may be obtained when the battery case 1 is made of an aluminum alloy. The aluminum alloy usable in this case may be any of JIS #3000 series through #5000 series, and preferably is JIS #3003 or #3005. More preferably, the aluminum alloy is any of JIS #5000 series.

With the battery case 1 according to the present invention, as described above in relation to the embodiments, a remarkable effect of having an enough strength to suppress the bulging deformation most effectively is obtained by forming projecting ridges 3 on the case inner surface 2 of long side plates 7 of the battery case 1, particularly when it is a rectangular battery case. However, the present invention is also applicable to a cylindrical battery case. That is, if projecting ridges as described in relation to the above embodiments are formed on the whole inner periphery of the cylindrical battery case, the strength against bulging deformation is increased and the battery case may be formed from aluminum or an aluminum alloy, that is a lightweight material. As a result, the wall thickness of the case may be reduced, and hence it becomes possible to further improve the weight energy density and volume energy density.

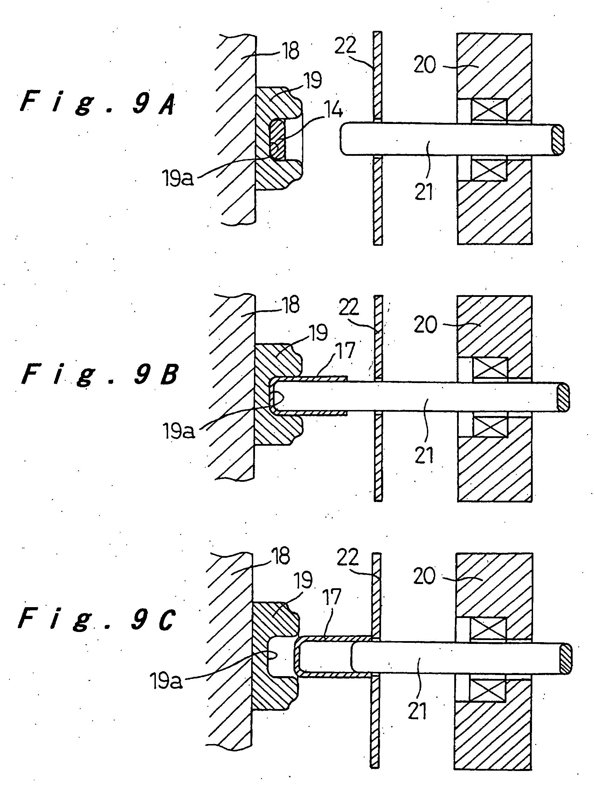

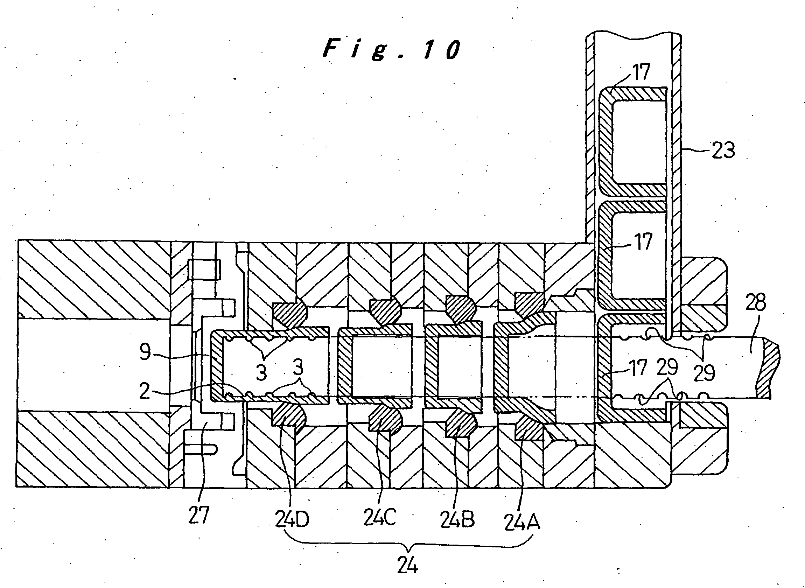

Next, a method for manufacturing a rectangular battery case 1 having the projecting ridges 3 as described above with good productivity and with high precision will be described. According to a first manufacturing method, in the first step as shown in the schematic cross sectional views of Figs. 9A through 9C, a pellet 14 as a battery case material is impact-formed to provide an intermediate cupped body 17 having a substantially elliptical cross sectional shape with a small ratio of minor axis to major axis. In the second step as shown in Fig. 10, this intermediate cupped body 17 is subjected to DI processing (namely, subjected to drawing and ironing successively all at once), whereby a battery case 1 having projecting ridges 3 as shown in Fig. 1A is produced.

More specifically, in the first step as shown in Figs. 9A through 9C, an aluminum pellet 14 as a battery case material is fed to the cavity 19a of a die 19 fixed to a die holder 18 of a pressing machine for carrying out the impact forming. Then, as shown in Fig. 9B, a punch 21 held by a punch holder 20 is moved towards the die 19 and punched into the cavity 19a of the die 19. The pellet 14 is crushed by the punch 21 and, while being spread to be pushed into the gap between the punch 21 and the cavity wall of the cavity 19a, is molded such that the wall of the molded body grows up along the outer periphery of the punch 21. When the punch 21 has been moved by a predetermined stroke, an intermediate cupped body 17 with a cross section of a desired elliptical shape is obtained. Since this intermediate cupped body 17 is formed all at once by the impact forming of the first step, there may be some slightly irregular shaped portions. However, this will pose no problem because such irregularity is corrected sufficiently by the following DI processing of the second step as described below.

The punch 21, that has been moved by the predetermined stroke, is then moved apart from the die 19 and towards the original position as shown in Fig. 9C. During this movement of the punch 21, the intermediate cupped body 17 that has been formed is drawn out of the cavity 19a by the punch 21 in the state where the intermediate cupped body 17 is attached to the punch 21, and then is removed from the punch 21 by a stripper 22.

The intermediate cupped body 17 obtained in the above-described first step is subjected in the second step as shown in Fig. 10 to the DI processing in which one drawing and three ironings are carried out by a drawing/ironing machine sequentially and all at once, whereby a rectangular battery case 1 having projecting ridges 3 on the case inner surface 2 as described in relation to the first embodiment is obtained. This drawing/ironing. machine is constituted by an intermediate product conveyor 23, a die mechanism 24, a stripper 27 and so on. The die mechanism 24 comprises a drawing die 24A and first to third ironing dice 24B through 24D. These dice 24A through 24D are arranged in series coaxially with the shaft center of a DI punch 28.

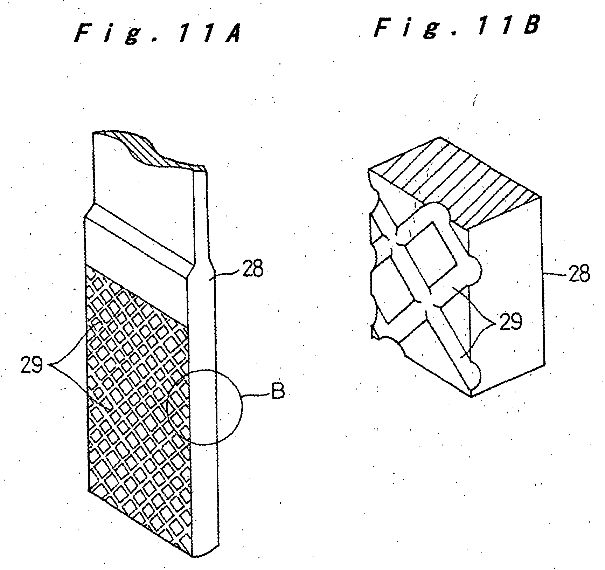

Fig. 11A is a perspective view of the DI punch 28, and Fig. 11B is an enlarged view of the part B in Fig. 11A. The DI punch 28 has an external shape similar to a rectangular plate with a substantially rectangular cross-sectional shape corresponding to the inner periphery of the rectangular battery case 1 according to the first embodiment, and provided with grid grooves 29 formed in a region extending from the bottom edge up to a predetermined position on the both long side faces, such that the configurations of the grid grooves corresponding to the configuration of the projecting ridges 3 to be formed on the case inner surface 2 of the battery case 1.

Returning to Fig. 10, the intermediate cupped body 17 that has been fed successively to and positioned at a molding position by the intermediate product conveyor 23 is drawn by the pushing movement of the DI punch 28 driven by a flywheel (not shown) into a shape corresponding to the contour of the DI punch by means of the drawing die 24A. The cupped body, upon passing though the drawing die 24A, has been formed into a substantially elliptical shape approximate to the cross-sectional shape of a desired rectangular battery case 1, that is slightly smaller both in the directions of major and minor axes and is larger in the longitudinal length than the intermediate cupped body 17, whereas there is not difference in the wall thickness.

The cupped body that has passed through the drawing die 24A is then subjected to first ironing by the first ironing die 24B as the result of advancement of the pushing movement of the DI punch 28. Thereby, the periphery is stretched so that the wall thickness is decreased and also the hardness is increased by the hardening effect of the ironing. The cupped body that has passed through the first ironing die 24B is subjected, by the further advancement of the pushing movement of the DI punch 28, to second ironing by the second ironing die 24C having a smaller ironing aperture than the first ironing die 24B and then to third ironing by the third ironing die 24D having a still smaller aperture than the second ironing die 24C. Thereby the peripheral wall is stretched successively and the wall thickness is decreased and also the hardness is increased by the hardening effect of the ironing.

When the cupped body passes through the third ironing die 24D, the case inner surface of the cupped body'is pressed hard against the periphery of the DI punch 28 by the pressure produced by the smallest ironing aperture of the third ironing die 24D. Thereby, the material on the case inner surface side of the cupped body is pushed into the grooves 29 of the DI punch 28 while being plastic deformed so that the grooves 29 are transferred to the case inner surface of the cupped body and thus the projecting ridges 3 are formed. Therefore, when the cupped body has passed through the third ironing die 24D, a rectangular battery case 1 having the desired configuration is obtained. This rectangular battery case 1 is removed from the drawing/ironing machine by the stripper 27, and the side top parts (ears) thereof which have been slightly irregular shaped after subjected to the processing above are cut off. Thus the shape of the rectangular battery case 1 as shown in Fig. 1A is obtained.

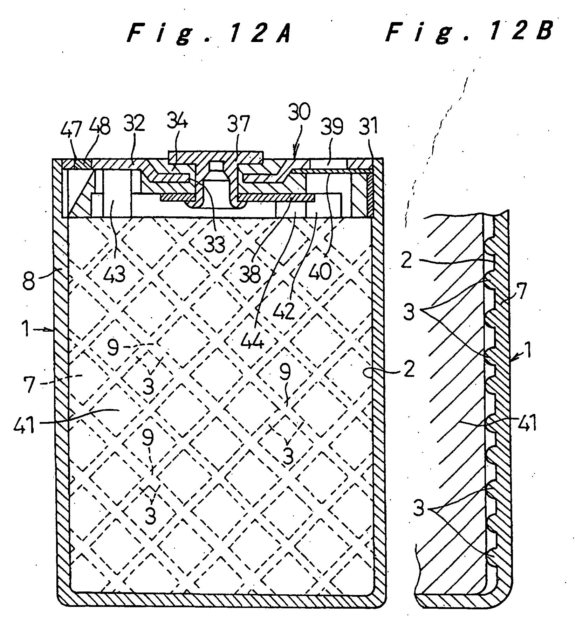

Figs. 12A and 12B show a lithium ion rechargeable battery, a type of rectangular lithium rechargeable batteries constituted according to the present invention using the rectangular battery case 1 as shown in Fig. 1A. Fig. 12A is a cut away front view, and Fig. 12B is a partially cut away side view. This rectangular battery has a sealing member 30 fitted in the inner periphery of the opening portion of the rectangular battery case 1, and the fitting portion 31 between the rectangular battery case 1 and the sealing member 30 is integrated by laser welding so that fluid-tight and air-tight seal is established. Since the portion of long side plate 7 of the battery case 1 where the sealing member 30 is to be fitted is a flat portion 4 with no projecting ridges 3 formed as shown in Fig. 1A, the battery case 1 and the sealing member 30 fitted therein are in tight contact without clearance therebetween and hence they are laser welded without any trouble. A sealing plate 32 constituting the main part of the sealing member 30 is formed such that a central part thereof is recessed inwards and is provided with a through hole 33. An electrolyte-resistant and electrically insulating synthetic resin gasket 34 coated with a sealing agent consisting of a mixture of blown asphalt and a mineral oil is attached integrally to the through hole 33.

A rivet 37 of nickel or nickel-plated steel serving also as an anode terminal is secured to the gasket 34. The rivet 37 is fitted into the center of the gasket 34 and fixed by caulking the tip end thereof with a washer 38 fitted under the gasket 34, so that the rivet 37 is attached tightly to the gasket 34 to establish a fluid-tight and air-tight seal. A substantially elliptical air exhaust opening 39 is provided between the rivet 37 serving also as an anode terminal and the outer edge of the long sides of the sealing plate 32. The air exhaust opening 39 is closed by aluminum foil 40 that is pressed against and integrated with the inner surface of the sealing plate 32 to constitute an anti-explosion safety valve. An electrode assembly 41 is accommodated in the power-generating element accommodating portion of the rectangular battery case 1. The electrode assembly 41 is formed by winding one strip-shaped cathode plate (not shown) and one strip-shaped anode plate (not shown) spirally and wrapping the outermost periphery of the wound body with a separator 42 formed by a porous polyethylene film so that the electrode assembly 41 assumes an oblong cross-sectional shape. When this electrode assembly 41 is placed inside the battery case 1, the outer surface of the electrode assembly 41 slides in linear contact with the projecting ridges 3 on the long side plates of the battery case 1. Therefore, in comparison with a conventional rectangular battery case in which an electrode assembly is slid in face contact with the case inner surface, the friction generated during the insertion of the electrode assembly 41 is decreased remarkably and the performance of inserting the electrode assembly 41 is improved. Thus, the electrode assembly 41 is inserted into the battery case 1 smoothly and rapidly. A cathode lead 43 of the electrode assembly 41 placed inside the battery case 1 in this manner is connected to the inner face of the sealing plate 32 by laser welding, while'an anode lead 44 is connected to the washer 38 by resistance welding.

The sealing plate 32 is provided with a liquid injecting hole 47 through which a predetermined amount of organic electrolyte is injected. The injected electrolyte enters into the battery case 1, passing through the clearance between the electrode assembly 41 and the case inner surface 2 of the long side plates 7 of the battery case 1 where no projecting ridges 3 are formed, namely through the gap between the adjacent projecting ridges 3. Since this gap also functions as a passage for allowing gas to escape during the injection of the electrolyte, the performance of injecting the electrolyte is remarkably improved in comparison with a rectangular battery in which there is almost no gap between the electrode assembly and the case inner surface of a conventional battery case. After injecting the electrolyte, the liquid injecting hole 47 is sealed by fitting a cover plate 48 thereinto, and the cover plate 48 and the sealing plate 32 are laser welded together, whereby a rectangular battery is completed.

In the rectangular battery thus constructed, since the strength of the long side plates 7 is increased remarkably by the projecting ridges 3 functioning as reinforcing bars for the long side plates 7, the bulging deformation of the long side plate 7 is prevented effectively even if the battery internal pressure has been raised for some reason. Also, the wall thickness of the long side plates 7 is increased only at the portions where the projecting ridges 3 are provided and the wall of the entire case is formed relatively thin. Further, since the battery case 1 is formed from aluminum or an aluminum alloy that is a lightweight material, and yet is prevented effectively from bulging deformation by the projecting ridges 3, it is possible to afford remarkably improved weight energy density and volume energy density.

Although the electrode assembly 41 has been described as one that has been wound spirally into an oblong cross-sectional shape, the rectangular battery case 1 may also be applicable when a rectangular battery, like a typical rectangular cell, contains an electrode assembly constructed by laminating a plurality of cathode plates and a plurality of anode plates with a separator interposed therebetween.

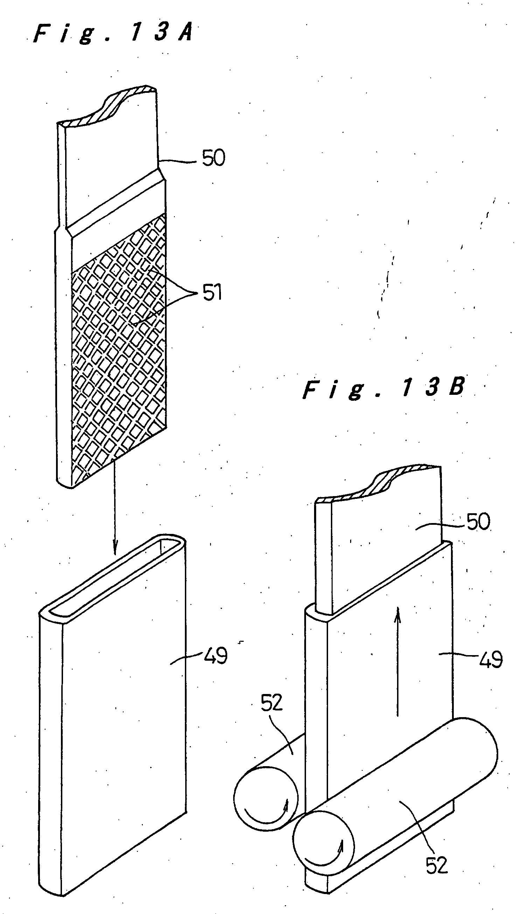

Next, a second method of manufacturing the battery case 1 will be described with reference to Figs. 13A and 13B. According to this manufacturing method, after an intermediate cupped body 17 having a substantially elliptical cross-sectional shape with a small ratio of minor axis to major axis is obtained by the first step, impact forming step as shown in Figs. 9A through 9C, this intermediate cupped body 17 is subjected to a DI processing in the second step as shown in Fig. 10 by using an ordinary DI punch having no grooves 29 formed, instead of the DI punch 28 having the grooves 29, whereby is produced an unprocessed rectangular battery case material 49 having the same external shape as the battery case 1 of the embodiment as shown in Fig. 1A and having no projecting ridges 3 formed on the case inner surface 2 of long side plates 7.

Then, as shown in Fig. 13A, a processing insert 50 is inserted into the unprocessed battery case material 49. The processing insert 50 is a rectangular plate having a substantially rectangular cross-sectional shape that is inserted into the unprocessed battery case material 49, and is provided with grid grooves 51 on the opposite long side plates. In other words, the processing insert 50 has a substantially similar configuration to the DI punch 28 as shown in Fig. 11A.

As shown in Fig. 13B, a pair of press rolls 52 are pressed with pressure against the outer surfaces of the opposite long side plates at the open end of the unprocessed battery case material 49 having the processing insert 50 inserted therein. The unprocessed battery cas,e material 49 is then moved as shown by the arrow in Fig. 13B so as to pass through between the pair of press rolls 52 pressurized from the opposite sides. During this movement, the inner surfaces of the opposite long side plates of the unprocessed battery case material 49 are pressed hard against the processing insert 50 by the pressing force of the press rolls 52, whereby a part of the material on the case inner surface enters into the grooves 51 of the processing insert 50 while being plastic deformed and thereby the grooves 51 are transferred to the case inner surface. Thus, projecting ridges 3 similar to those shown in Fig. 1A are formed on the case inner surface 2 and a rectangular battery case 1 according to the first embodiment is completed. This battery case 1 is removed from the processing insert 50, while being peeled from the outer surfaces of the processing insert 50 by using, for example, means for feeding compressed air between the case inner surface and the processing insert 50. The processing insert 50 is formed to have a smaller thickness in the portion where no grooves 51 are provided so that the compressed air is supplied.

### Industrial Applicability

As described above, the battery case according to the present invention is applicable for ensuring sufficiently high weight energy density and volume energy density by making the wall of the can relatively thin, and effectively supplying the bulging deformation of the battery case caused by increase of the battery internal pressure by providing a plurality of projecting ridges on the case inner surface so as to be mutually connected at the intersections so that the projecting ridges function as reinforcing bars.

In addition, when an electrode assembly is inserted into the battery case, the friction exerted to the electrode assembly is decreased remarkably because the outer surface of the electrode assembly slides in linear contact with the projecting ridges. Therefore, the present invention is useful for inserting the electrode assembly into the battery case smoothly and rapidly. Further, when electrolyte is injected, the clearance created between the electrode assembly and the flat portion of the case inner surface of the battery case where no projecting ridges are formed functions as a passage to let gas escape. Therefore, the present invention is useful for injecting electrolyte in a short period of time.

## Claims

1. A battery case, having a closed-end tubular outer shape for accommodating power-generating elements consisting of an electrode assembly (41) and electrolyte to configure a battery, wherein
on an inner surface (2) of the case, a plurality of projecting ridges (3) extending linearly and projecting inwards from the inner surface side of the case in a direction of a case wall thickness is provided, and the projecting ridges (3) is arranged on opposite sides of a tube center (S) so as to be inclined with respect to a direction of the tube center such that the projecting ridges (3) intersect mutually to form a grid pattern and are connected mutually at respective intersections (9).

2. The battery case according to claim 1, wherein
at least two groups of the projecting ridges (3) are provided on the opposite sides of the tube center (S) so as to be inclined at the same angle with respect to the tube center (S), the projecting ridges (3) in each group being arranged parallel to each other.

3. The battery case according to claim 2, wherein
the two groups of the projecting ridges (3) are formed on the opposite sides of the tube center (S) so as to be inclined both at an angle of 45 degrees with respect to the direction of the tube center.

4. The battery case according to claim 1, wherein
the projecting ridges (3) are inclined at an angle within the range of 0 to 90 degrees with respect to the direction of the tube center.

5. The battery case according to claim 1, wherein
the projecting ridges (3) have a longitudinal sectional shape of a circular-arc.

6. The battery case according to claim 1, wherein
the battery case has a closed-end, rectangular tubular external shape with a substantially rectangular cross sectional shape, and has the projecting ridges (3) formed on the case inner surface (2) at least of long side plates (7) of the closed-end rectangular tubular body.

7. The battery case according to claim 6, wherein
a wall thickness of the long side plates (7) is set to 0.25 mm or less.

8. The battery case according to claim 6, wherein
a wall thickness t₁ of the long side plates (7), a wall thickness t₂ of short side plates (8), and a wall thickness t₃ of corners (5) satisfy the relationship of t₁ < t₂ < t₃.

9. The battery case according to claim 1, wherein
a projecting height (H) of the projecting ridge (3) from the case inner surface (2) is set to a value in the range from 1 to 50% of a wall thickness of the battery case.

10. The battery case according to claim 9, wherein
a width (W) of the projecting ridge (3) is set to a value in the range from 1 to 30 times of the projecting height (H) from the case inner surface (2).

11. The battery case according to claim 10, wherein
an interval (K) between the projecting ridges (3) arranged parallel to one another is set to a value within the range from 2 to 20 times of the width (W) of the projecting ridges (3).

12. The battery case according to claim 1, wherein
at least a region of the closed-end tube extending from an open end to an extent where a bottom of a sealing member (30) is inserted is a flat portion (4) with no projecting ridges (3) formed.

13. The battery case according to claim 1, wherein the case is made of aluminum or an aluminum alloy.

14. A battery, constituted by using the battery case according to claim 1, accommodating power-generating elements in an interior of the battery case (1), and sealing an opening portion of the battery case with a sealing member (30) in a fluid-tight configuration.
